# EUROPEAN PATENT APPLICATION

(11) **EP 4 832 444 A1**
(43) Date of publication of application: **28.10.2026**
(21) Application number: 26173476.8
(22) Date of filing: 20.04.2026
(51) Int. Cl.: H04L 41/5009, H04L 41/0654, H04L 43/08, H04L 43/20

(54) **AUTOMATED DISASTER RECOVERY NETWORK FUNCTION DEPLOYMENT**

(30) Priority: 23.04.2025 US 202519186879
(71) Applicant: Oracle International Corporation, Redwood Shores, CA 94065 (US)
(72) Inventor: SRIVASTAVA, Ankit, Redwood City, 94065 (US); HAMRICK Jr., Vincent A., Redwood City, 94065 (US); JHA, Alok Shallendra, Redwood City, 94065 (US)
(74) Representative: D Young & Co LLP

(57) **Abstract**

Various embodiments of the present technology generally relate to systems and methods for automated disaster recovery network function (NF) deployment. In an embodiment, a method may comprise operating a network data analytics function (NWDAF) of a mobile network, including collecting metrics of producer NFs within the mobile network, determining an availability status of a service offered by the producer NFs based on the metrics, and automatically deploying a disaster recovery NF configured to provide the service to the mobile network when the NWDAF determines the service has an availability status of unavailable.

## Description

### TECHNICAL FIELD

Various embodiments of the present technology generally relate to management of networks, such as fifth generation (5G) communications networks. More specifically, embodiments of the present technology relate to systems and methods for improved handling of network function unavailability.

### BACKGROUND

In some communication network architectures, such as those using third generation partnership project (3GPP) standards, service may be implemented by establishing a user communication session, such as a UE (User Equipment) session or a PDU (packet data unit or protocol data unit) session. To support a voice or data call, a number of network functions (NFs) within a 5G network may work together to manage aspects of the session.

3GPP TS (technical specification) 23.501 defines the 5G System Architecture as a Service Based Architecture, i.e., a system architecture in which the system functionality is achieved by a set of NFs providing services to other NFs authorized to access their services. In any given NF interaction, the NF providing services may be referred to as a "producer NF" (or pNF), and an NF accessing the services may be referred to as a "consumer NF" (or cNF). An NF instance may expose one or more NF services by registering with a network repository function (NRF) in the network. Consumer NFs or service communications proxies (SCPs, a particular type of NF) may perform service discovery with the NRF to identify pNFs providing desired services.

In some instances, producer NFs may become unavailable, for example due to network failures, NF business logic failures, infrastructure component failures (e.g., service mesh), or maintenance. To account for potential NF unavailability, network operators may plan geo-redundant NF deployment in a network, for example by deploying multiple NFs in an NF set that can take over if one of the other NFs in the set becomes unavailable. For example, 1+1 geo-redundant deployment may mean one NF instance is available to handle a failure of one other NF instance. In 1+2 deployment, one NF instance may be available to handle failure of two other NF instances, and so on. However, even after geo-redundant NF deployment, operators may still see NF unavailability in the network, such as when all geo-redundant NFs become unavailable due to any combination of various reasons as mentioned above.

Such NF unavailability may not be planned and can put the network in a vulnerable situation. NF unavailability can result in network traffic loss, revenue loss for network operators, and other problems. In some examples, operators may have to transition traffic from 5G service to 4G to handle NF unavailability in the 5G core network, which can negatively impact the user experience. Further, enhancing NF geo-redundancy to handle NF unavailability issues in the network may be costly in terms of infrastructure and operational costs. Meanwhile, disaster recovery NF deployment, in which new NFs are deployed to handle NF failures or unavailability in the network, is generally a manual process that can be cumbersome and slow to implement. Accordingly, there exists a need for improved disaster recovery NF deployment operations.

The information provided in this section is presented as background information and serves only to assist in any understanding of the present disclosure. No determination has been made and no assertion is made as to whether any of the above might be applicable as prior art with regard to the present disclosure.

### SUMMARY

Particular aspects are set out in the appended independent claims. Various optional embodiments are set out in the dependent claims.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Various embodiments herein relate to systems, methods, and computer-readable storage media for performing automated disaster recovery network function deployment. In an embodiment, a network data analytics function (NWDAF) system may comprise one or more processors, and a memory having stored thereon instructions. The instructions, upon execution, may cause the one or more processors to collect metrics of producer network functions (NFs) within a 5G communication network, determine an availability status of a service offered by the producer NFs based on the metrics, and automatically deploy a disaster recovery NF configured to provide the service to the 5G communication network when the NWDAF determines the service has an availability status of unavailable.

In some embodiments, the NWDAF system may determine when the availability status of the service changes from unavailable to available based on the metrics, and automatically decommission the disaster recovery NF when the availability status changes to available. The NWDAF system may continuously collect the metrics to monitor service availability within the 5G communications network. In some examples, the NWDAF system may categorize whether each instance of the producer NFs is unavailable based on the metrics. The NWDAF system may determine the availability status of the service based on a number of available producer NFs that provide the service, and determine that the service is unavailable when the number of available producer NFs that provide the service falls below a configured threshold. Further, the NWDAF system may determine that the availability status of the service changes from unavailable to available when the number of available producer NFs that provide the service rises back above the configured threshold. In some embodiments, the NWDAF system may issue an NF deployment command to a continuous delivery pipeline of the 5G communications network to automatically deploy the disaster recovery NF. In some examples, the NWDAF system may automatically deploy the disaster recovery NF by creating a new NF instance. The NWDAF system may collect the metrics from a time-series database that obtains performance metrics from individual NFs. The metrics may include at least one data element from the group consisting of service-based interface (SBI) traffic failure rate, internal error rate, central processing unit (CPU) utilization, processing latency, and memory utilization. In some embodiments, the disaster recovery NF may register with a network repository function (NRF) of the mobile network when the disaster recovery NF is deployed, and de-registering from the NRF when the disaster recovery NF is decommissioned.

In an alternative embodiment, a method may comprise operating a network data analytics function (NWDAF) of a mobile network, including collecting metrics of producer network functions (NFs) within the mobile network, determining an availability status of a service offered by the producer NFs based on the metrics, and automatically deploying a disaster recovery NF configured to provide the service to the mobile network when the NWDAF determines the service has an availability status of unavailable.

### BRIEF DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein.
FIG. 1 is a diagram of a system configured to implement automated disaster recovery network function deployment, in accordance with certain embodiments of the present disclosure;
FIG. 2 is a diagram of a system configured to implement automated disaster recovery network function deployment, in accordance with certain embodiments of the present disclosure;
FIG. 3 is a diagram of a system configured to implement automated disaster recovery network function deployment, in accordance with certain embodiments of the present disclosure;
FIG. 4 depicts a flow diagram of an example method to perform automated disaster recovery network function deployment, in accordance with certain embodiments of the present disclosure;
FIG. 5 depicts a flowchart of an example method to perform automated disaster recovery network function deployment, in accordance with certain embodiments of the present disclosure; and
FIG. 6 is a diagram of a system configured to implement automated disaster recovery network function deployment, in accordance with certain embodiments of the present disclosure.

Some components or operations may be separated into different blocks or combined into a single block for the purposes of discussion of some of the embodiments of the present technology. Moreover, while the technology is amenable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### DETAILED DESCRIPTION

In the following detailed description of certain embodiments, reference is made to the accompanying drawings which form a part hereof, and in which are shown by way of illustration of example embodiments. It is also to be understood that features of the embodiments and examples herein can be combined, exchanged, or removed, other embodiments may be utilized or created, and structural changes may be made without departing from the scope of the present disclosure. The following description and associated figures teach the best mode of the claimed subject matter. For the purpose of teaching inventive principles, some aspects of the best mode may be simplified or omitted.

In accordance with various embodiments, the methods and functions described herein may be implemented as one or more software programs running on a computer processor or controller. Dedicated hardware implementations including, but not limited to, application specific integrated circuits, programmable logic arrays, and other hardware devices can likewise be constructed to implement the methods and functions described herein. Methods and functions may be performed by modules or nodes, which may include one or more physical components of a computing device (e.g., logic, circuits, processors, etc.) configured to perform a particular task or job, or may include instructions that, when executed, can cause a processor to perform a particular task or job, or any combination thereof. Further, the methods described herein may be implemented as a computer readable medium (whether transmission or storage medium, such as a memory device) including instructions that, when executed, cause a processor to perform the methods.

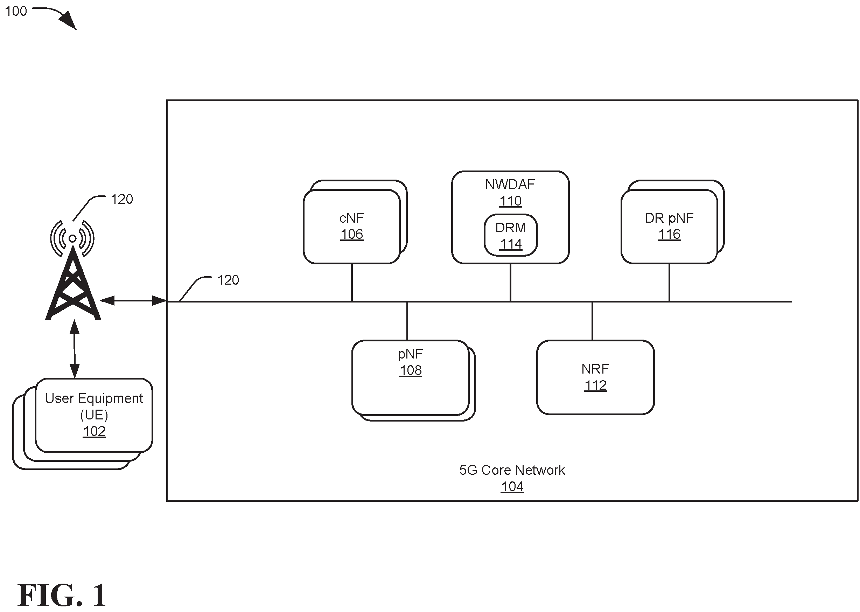

FIG. 1 is a diagram of a system 100 configured to implement automated disaster recovery network function deployment, in accordance with certain embodiments of the present disclosure. The example system 100 may include a mobile network implementing 3GPP (3rd Generation Partnership Project) communication standards, although the present disclosure may apply to other communication networks. In particular, the mobile network may include components and elements to implement a cellular network, such as a 5G Core (5GC or 5GS) network 104. The system 100 may include one or more user equipment (UE) 102 connected to 5G network 104 via network connectivity components 120.

Each or any of UE 102, 5G network 104 and its components, and network 120 may be implemented via computers, servers, hardware and software modules, or other system components. The components of 5G network 104, or the physical devices implementing them, may be co-located, remotely distributed, or any combination thereof. The elements of system 100 may include components hosted or situated in the cloud, implemented as software modules potentially distributed across one or more server devices or other physical components, or otherwise implemented.

UE 102 may be a device, system, or module that may utilize the resources of the 5G network 104, such as to establish communications with another UE. Communication sessions may include, but are not limited to, IMS calls (Internet Protocol Multimedia subsystem), other cell phone calls, internet or other data connections, or any and all other types of communications sessions over 5G networks. UE 102 may include devices such as cell phones, tablets, modems, vehicles, desktop or laptop computers, televisions or set-top boxes, smart home devices, voice over IP (VoIP) devices, internet of things (IoT) devices, or any and all other systems that may utilize a cellular network.

Network connectivity components 120 may provide communication paths between UE 102 and 5G network 104. Network connectivity components 120 may comprise components that enable communication over communication links, such as network cards, ports, radio frequency (RF) modules, telecommunications channels, cell towers, switches, routers, processing circuitry and software, or other communication components. Network connectivity components 120 may include metallic, wireless, cellular, or optical links, using various communication formats and protocols. In some examples, network connectivity components 120 may simply be referred to as a "network" by which systems or modules are connected or communicate.

The 5G network 104 may comprise a mobile communications network that provides services to UEs 102 through the network connectivity components 120. 5G network 104 may include a plurality of components, modules, or network functions (NFs) configured to provide mobile communication services via the corresponding 5G Core communications protocols. Some components of 5G network 104 may be configured to communicate and operate with other networks, such as 4G networks, networks controlled by other network operators, or other network environments. Although referred to as a 5G core network 104, the network 104 may include components associated with 5G service, 4G service, or a combination thereof. 5G core network 104 may include one or more consumer network functions (cNF) 106, one or more producer network functions (pNFs) 108, a network data analytics function (NWDAF) 110, and a network or NF repository function (NRF) 112, any of which may be referred to as types of NFs, in some embodiments.

NRF 112 may be a monitoring element which includes and maintains a repository of NF profiles for available NF instances (including, e.g., cNF 106, pNF 108, and NWDAF 110). The NF profiles may identify what services or resources each NF provides, and potentially metadata provided by the NF, which may specify vendor-specific features supported by the NF but not included in standard 3GPP specifications. For example, NFs may register to provide registration information and metadata regarding the NF to NRF 112 for storing in the repository. Once an NF is registered with NRF 112, the NRF may provide information regarding the NF in response to discovery requests. For example, an NF may send a discovery request to NRF 112 including search criteria, and the NRF may issue a discovery response providing identifying information and metadata for NFs in the repository matching the search criteria. Consumer NFs 106 can subscribe to receive information about producer NF instances 108 that have registered with NRF 112.

A network node or NF that provides service may be referred to as a producer NF (e.g., pNF 108), while a network node or NF that consumes service may be referred to as a consumer NF (e.g., cNF 106). A network function can be both a producer NF and a consumer NF depending on whether it is consuming or providing service in a given exchange. Generic consumer NFs 106 and producer NFs 108 are depicted in system 100 in addition to specific example NFs (which may act as consumers or producers) such as NWDAF 110 and NRF 112.

A cNF 106 may issue a discovery or resource request (e.g., to NRF 112) in order to access a resource provided by a pNF 108. A producer NF 108 may be an NF that offers a resource corresponding to a resource request from a consumer NF 106. While the NFs in the depicted example are categorized into "consumer" and "producer" NFs, the distinction may be purely based on which nodes are currently issuing NF discovery requests and which nodes may match or satisfy the requested criteria. A consumer NF may provide resources to the network, and may be a producer NF to other NF discovery requests, and likewise a producer NF may issue a discovery request and be a consumer NF.

NWDAF 110 may collect and analyze information from various components of the 5G network 104 (e.g., NFs and UEs) to generate analytics data. NWDAF 110 may be a consumer NF for collecting various metrics, and a producer NF for providing a variety of analytics data to other components of network 104. Consumer NFs 106 may subscribe to the NWDAF 110 for updates on specified analytics data, such as when a data value exceeds a selected threshold. Consumer NFs 106 can also query information from the NWDAF 110 as needed, rather than or in addition to subscribing.

Consumer NFs 106 may issue NF discovery requests to NRF 112 to locate a specified resource or functionality. NRF 112 may consult the NF repository for pNFs 108 that satisfy the requested criteria, and provide a discovery response including details (e.g., access information) for matching pNFs. A cNF 106 may use the discovery response information to attempt to establish a connection to a pNF 108 and obtain the desired service or resource. In some embodiments, cNFs 106 (or associated service communications proxies, SCPs, that perform request routing) may store information about discovered pNFs 108 that may be used to route future service requests without performing another discovery request to NRF 112.

In an example embodiment, a cNF 106 may issue a discovery request to NRF 112 for a particular service or type of pNF 108. NRF 112 may reply with information for a plurality of pNFs 108, which pNFs 108 may include a preferred pNF for the requesting cNF 106, as well as other pNFs providing a same service from a same NFSet, or one or more other geo-redundant pNFs for the preferred pNF. Based on the discovery response, cNF 106 may issue a service request to the preferred pNF 108. However, the preferred pNF 108 may be unavailable due to network failures, business logic failures, or other issues. When the service request fails, cNF 106 may then send a service request to a geo-redundant pNF 108 from the discovery response. If the geo-redundant pNF 108 is also unavailable, the call may fail, or the session may need to be transitioned to a 4G network. The failed service requests and lack of available pNF 108 may result in delays, loss of service, compromised call quality, loss of revenue for the network operator, or other negative repercussions. Manually deploying disaster recovery (DR) pNFs 116 for unavailable services may be slow and cumbersome to implement.

Accordingly, NWDAF 110 may be configured to include a disaster recovery module (DRM) 114. Using the DRM 114, NWDAF 110 may be configured to automatically predict or detect NF unavailability of pNFs 108, trigger the commissioning and deployment of backup DR NFs 116, switch network traffic to the backup DR NFs 116 while the pNFs 108 are unavailable, and de-commission the DR NFs 116 once the failed pNFs 108 are recovered and become available. As described herein, deploying a backup DR NF 116 may comprise creating and running a new NF instance.

According to some embodiments, NWDAF 110 may implement NF status detection operations to monitor pNF 108 details and predict when the pNFs have or will become unavailable. In order to implement the status monitoring, NWDAF 110 may continuously (e.g., at regular or selected intervals) collect metrics from producer NFs, SCPs, or other components indicative of producer NF availability or ability to handle service requests. The metrics may include service-based interface (SBI) traffic failure rate, internal error rate, central processing unit (CPU) utilization, processing latency, component-level status and health of NF core services, memory utilization, other metrics, or any combination thereof.

The metrics may be obtained directly from the pNFs 108, or from NFs in communication with the pNFs. In some examples, producer NFs may publish metrics to a monitoring tool such as Prometheus, a time-series database and part of a cloud network platform for the 5G network 104. Prometheus may periodically poll values from NFs within network 104, and store the results. NWDAF 110 may then poll Prometheus to obtain the NF metrics.

Based on the collected metrics, NWDAF 110 may analyze the data to determine or predict NF instance and service unavailability. For example, if the CPU utilization, memory utilization, and traffic failure rate exceed a selected threshold, an NF may be deemed unavailable or soon to become unavailable. Each pNF 108 may be considered a single NF "instance", and some NF instances may provide more than one service. Accordingly, NWDAF 110 may be configured to evaluate the availability of both instances of a type of NF, as well as service instances of NFs providing a particular service. NWDAF 110 may group pNF 108 instances into various categories based on the collected status metrics and evaluation, such as "available", "degraded", and "unavailable." The NWDAF 110 may then categorize each NF service, as per the number of NF instances or NF service instances available to provide that NF service, similarly into categories of "available", "degraded", or "unavailable." "Available" may indicate normal or adequate availability; "degraded" may indicate reduced availability, such as due to heavy processing loads on reachable NFs; and "unavailable" may indicate that an instance cannot be reached and is not available at all. However, in some embodiments NFs may be categorized differently, such as simply "available" and "unavailable."

When a number of NF instances or NF service instances in the "available" status falls below a configured threshold, NWDAF 110 may trigger a service unavailability notification to begin an automated backup DR NF management operation. The configured threshold may be a selected percentage or fraction of NF instances available to process traffic and service requests. A network operator may configure the response to the service unavailability notification, such as automatically deploying and configuring one or more backup DR NFs 116, triggering an alarm to the network operator, other responses, or a combination thereof.

In case of a configuration to deploy a backup DR NF 116, the NWDAF 110 may generate a command to deploy the DR NF 116, such as by activating a network operators continuous delivery system to implement the deployment of the new NF. The DR pNF 116 may register with NRF 112 to expose the NF service(s) provided by the DR pNF 116 to the network 104. NRF 112 may provide the access details for the DR pNF 116 to cNFs 106, enabling access to crucial services through the DR pNF 116 even if the other pNFs 108 are unavailable.

NWDAF 110 may continue to monitor metrics within the network 104. Once the number of NF instances or NF service instances with an "available" classification goes above a configured threshold, NWDAF 110 may trigger a service availability notification. The service availability notification may trigger a command to de-commission the backup DR NF 116, for example to an operator's continuous delivery system.

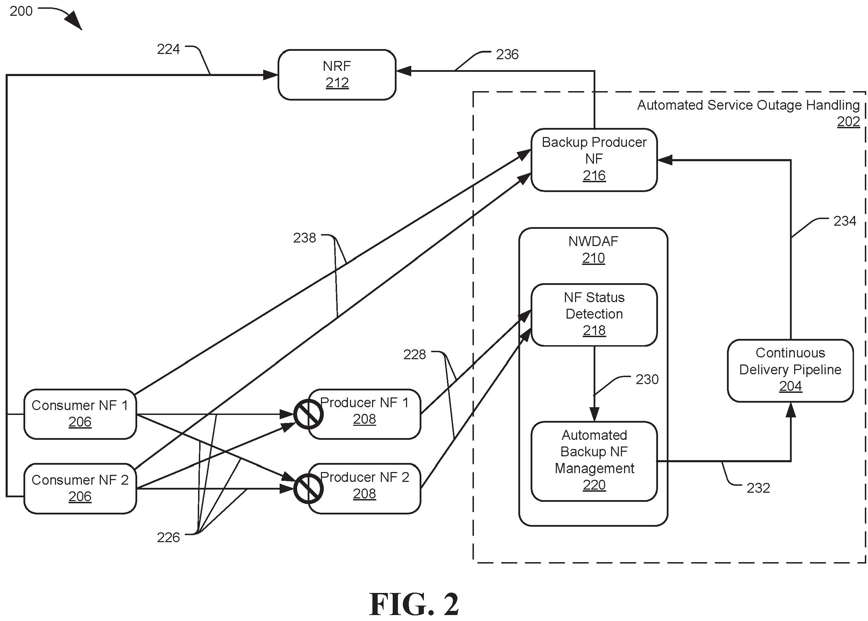

According to the proposed process, a 5G core network 104 may monitor for service unavailability, and in response to detecting unavailability, automatically deploy DR pNF 116 to provide the unavailable service, minimizing negative service impacts and without the costly approach of adding additional geo-redundancy that may still fail. Further, once normal service availability has resumed, the proposed process allows for automatic service availability detection and de-commissioning of the DR pNF 116, minimizing operational waste. A diagram for service availability monitoring and automated backup DR NF deployment is further described in regard to FIG. 2.

FIG. 2 is a diagram of a system 200 configured to implement automated disaster recovery network function deployment, in accordance with certain embodiments of the present disclosure. In particular, system 200 depicts an example set of NFs within a mobile communications network configured to request and provide selected services, and to detect service unavailability and automatically deploy backup DR NFs in response. The network elements may include consumer NFs (cNFs) 206, producer NFs (pNFs) 208, NRF 212, and an automated service outage handling system 202. The automated service outage handling system 202 may include components configured to detect service availability and deploy disaster recovery NFs, such as NWDAF 210, continuous delivery pipeline 204, and backup producer NF (DR pNF) 216. Selected components may correspond to cNFs 106, pNFs 108, NWDAF 110, NRF 212, and DR pNF 116 as described in regard to FIG. 1.

As previously described, NRF 212 may maintain a repository of NF profiles, such as profiles describing pNFs 208 and the services they provide. When cNFs 206 require a particular service, they may issue a discovery request to NRF 212 for information on pNFs 208 providing that service, along line 224. NRF 212 may issue a discovery response providing a list of potential pNFs 208 providing the requested service, which may include pNFs providing geo-redundancy to other pNFs on the list. For example Producer NF 1 and Producer NF 2 208 may provide geo-redundancy to each other, and information for both may be provided to Consumer NF1 and Consumer NF 2 206.

Based on the discovery response, cNFs 206 may issue service requests to the provided pNFs 208, along lines 226. In some embodiments, different cNFs 206 may select or be provided with different primary pNFs 208 for servicing their requests, for example based on geographic distribution of components, processing loads, etc. For example, consumer NF 1 206 may initially attempt to reach producer NF 1 208, while consumer NF 2 206 may initially attempt to reach producer NF 2 208. However, pNFs 208 may both be unavailable due to various reasons, such as business logic failure, network connectivity failure, infrastructure failure, maintenance, or other issues. When initial service requests fail, cNFs 206 may attempt to obtain service from geo-redundant pNFs 208, along lines 226. For example, consumer NF 1 206 may issue a service request to producer NF 2 208, and consumer NF 2 206 may issue a service request to producer NF 1 208. However, in the present example, both geo-redundant pNFs 208 may be unavailable to service the requests.

To address NF service unavailability, the automated service outage handling system 202 may be configured to monitor service availability and deploy backup DR NFs 216 to address detected unavailability. NWDAF 210 may include an NF status detection module 218, and an automated backup NF management module 220, in order to monitor service availability and deploy backup NFs, respectively. NF status detection module 218 may continuously or regularly collect metrics about pNFs 208, along lines 228. NF status detection module 218 may obtain the metrics from pNFs 208 directly, from other NFs in communication with pNFs 208, from metrics repositories such as Prometheus, or from other sources. Based on the collected metrics, NF status detection module 218 may make a determination whether an NF status is available or unavailable, such as by evaluating individual NF instances and NF service instances and determining when a threshold number of instances are or are likely to become unavailable, degraded, or otherwise unreliable.

When the NF status detection module 218 determines there is an NF service outage or sufficiently degraded ability, it may issue an alarm or notification to automated backup NF management module 220, along line 230. In response to a service outage notification, automated backup NF management module 220 may deploy and configure a backup producer NF 216 for the unavailable service, either directly or via another component. For example, automated backup NF management module 220 may generate a command to deploy the backup producer NF 216 and send it to the network operators continuous delivery pipeline system 204 along line 232. The continuous delivery pipeline 204 may be a series of automated processes for delivering or deploying software elements within the operator's network. In response to the command 232, continuous delivery pipeline 204 may execute the operations to commission and deploy a backup DR pNF instance 216, along line 234. Once deployed, backup pNF 216 may register with NRF 212, along line 236, to expose its services to the network.

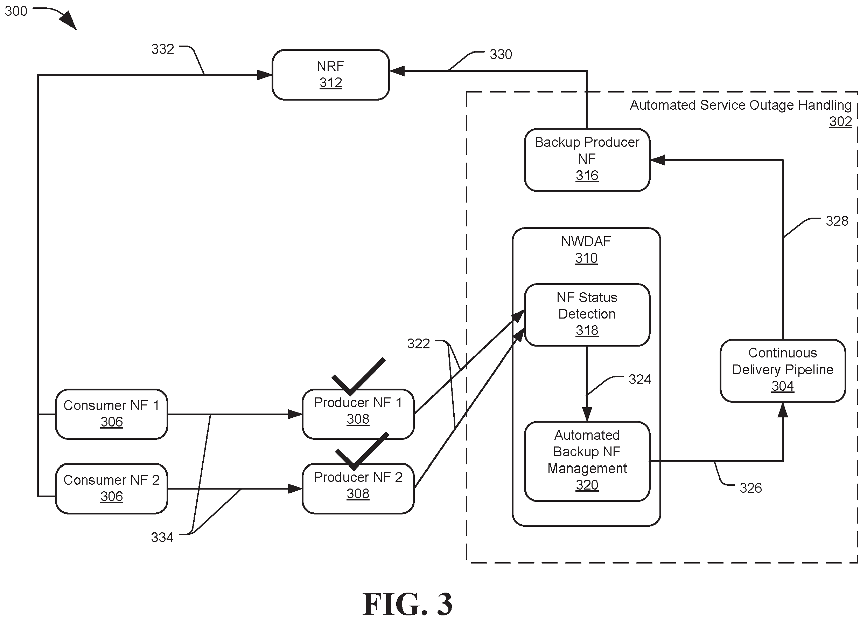

Consumer NFs 206 may learn about backup DR pNF 216 by issuing a discovery request to NRF 212, along line 224. For example, cNFs 206 may issue a new discovery request 224 to NRF 212 in response to failing to reach pNFs 208 at 226, and may be notified of the new backup pNF 216 in response. In another example, NWDAF 210 may detect a service outage and automatically deploy backup producer NF 216, which may register with NRF 212. The outage at pNF 408 may trigger a subscription update notification 224 from NRF 212 to consumer NFs 206, before consumer NFs 206 even attempted and failed to reach pNFs 208, prompting consumer NFs 206 to issue a discovery request and learn about the new DR pNF 216. According to the proposed embodiments, DR producer NFs 216 may be deployed automatically in response to service outages within a network, preventing session failures and not requiring manual intervention. A process for automatically decommissioning a backup pNF 216 is described in regard to FIG. 3.

FIG. 3 is a diagram of a system 300 configured to implement automated disaster recovery network function deployment, in accordance with certain embodiments of the present disclosure. In particular, system 300 depicts an example set of NFs within a mobile communications network configured to monitor service unavailability and automatically decomission backup DR NFs in response to normal service availability being restored. The network elements may include consumer NFs (cNFs) 306, producer NFs (pNFs) 308, NRF 312, and an automated service outage handling system 302. The automated service outage handling system 302 may include components configured to detect service availability and deploy or decommission disaster recovery NFs, such as NWDAF 310, continuous delivery pipeline 304, and backup producer NF (DR pNF) 316. Selected components may correspond to elements as described in regard to FIGs. 1 and 2.

After deploying backup producer NF 316, NWDAF 310 may continue to monitor service availability status, via NF status detection module 318 and lines 322. At some point, pNFs 308 may be restored to active and available status. When NF status detection module 318 determines that normal service availability has been restored (e.g., based a number of available NF instances or NF service instances exceeding a selected percentage or threshold number), it may issue a service availability notification 324 to automated backup NF management module 320. In response, automated backup NF management module 320 may generate a command to decommission backup producer NF 316, and send it to continuous delivery pipeline 304, along line 326.

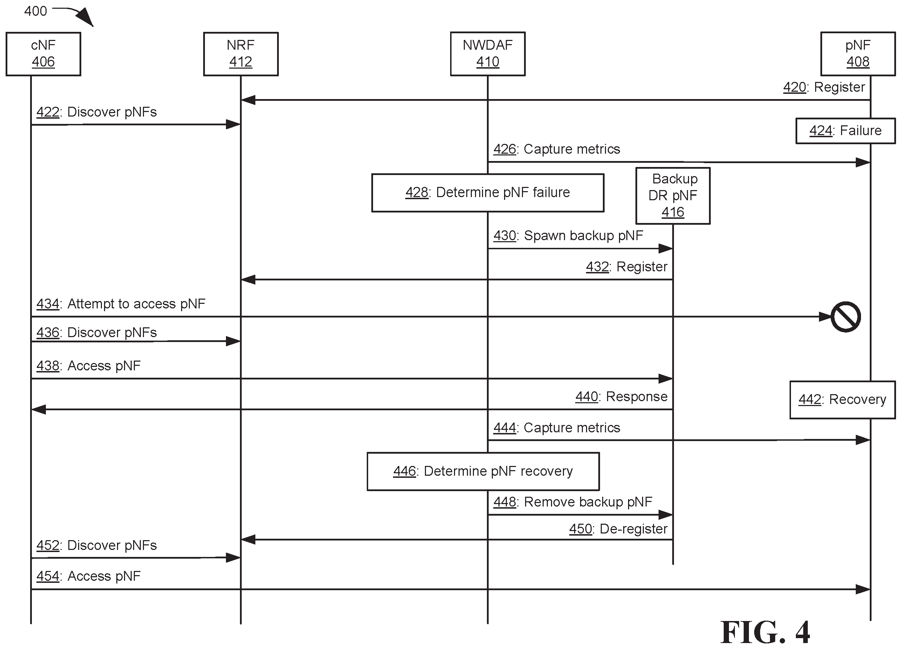

Based on the command 326 to decommission backup pNF 316, continuous delivery pipeline 304 may execute the operations necessary to decommission and remove backup producer NF 316, along line 328. As part of the decommissioning process, backup DR pNF 316 may de-register with NRF 312, along 330, so that NRF 312 will no longer provide details on backup pNF 316 in response to discovery requests. Further, NRF 312 may issue update notifications to any subscribed NFs indicating that backup pNF 316 de-registered and is no longer available (e.g., along line 332). Now, when cNFs 306 issue discovery requests 332 to NRF 312 for service instances, NRF 312 may not provide details for backup pNF 316, and may only provide details for the restored pNFs 308. Based on the details for pNFs 308 received in the discovery response (or subscription update notification) 332, cNFs 306 may access pNFs 308 to provide requested services. Via the automated backup pNF 316 decommissioning process, network resources can be saved by only having backup NFs deployed when necessary to address service outages. A process for implementing automated backup NF deployment and decommissioning is described in regard to FIG. 4.

FIG. 4 depicts a flow diagram 400 of an example method to perform automated disaster recovery network function deployment, in accordance with certain embodiments of the present disclosure. In particular, the diagram 400 may depict a process flow within a 5G communication network by which an NWDAF may monitor service availability within the network, and automatically deploy or decommission backup disaster recovery (DR) producer NFs to provide unavailable services as needed. Diagram 400 may depict an example message and processing flow between a consumer NF (cNF) 406, a network repository function (NRF) 412, a network data analytics function (NWDAF) 410, a producer NF (pNF) 408, and a backup DR pNF 416. The components in diagram 400 may correspond to elements described in regard to FIGs. 1-3.

At 420, pNF 408 may register with NRF 412, exposing the services of the pNF 408 for access by other network elements. NRF 412 may add pNF 408 to a list of NFs within the network, and can provide information about pNF 408 in response to discovery requests. At 422, cNF 408 may issue a discovery request to NRF 412 to determine pNFs available to provide a service specified in the discovery request. NRF 412 may reply with a discovery response identifying pNF 408, including access information cNF 406 may use to send service requests to pNF 408.

Meanwhile, at 424, pNF 408 may suffer a failure or otherwise become unavailable. NWDAF 410, at 426, may be capturing metrics on service availability of NFs within the network, including pNF 408. NWDAF 410 may collect metrics 426 from pNF 408 directly, as well as from other NFs, SCPs, a time-series database such as Prometheus, or other elements that may have attempted to exchange metrics with pNF 408. Therefore, even if pNF 408 fails and cannot provide metrics, NWDAF 410 may still be able to determine the availability of pNF 408 based on metrics from other network elements. At 428, NWDAF 410 may determine the failure or unavailability of pNF 408. NWDAF 408 may determine that the unavailability of pNF 408 means there are insufficient service instances available within the network, according to a set or selected threshold or percentage of available NF instances and service instances providing the corresponding service on the network. Based on the service unavailability determination, NWDAF 410 may issue a command or instructions to spawn a backup disaster-recovery NF 416 instance to provide the unavailable service, at 430. Newly created backup DR pNF 416 may register with NRF 412, at 432, and thereby expose its services to other NFs on the network.

At 434, cNF 406 may issue a service request to pNF 408, for example based on the discovery response from NRF 412 received at 422, and may fail to receive a response. In some examples, cNF 406 may attempt to access other unavailable pNFs 408 as well, such as geo-redundant pNFs. When cNF 406 fails to reach pNF 408, cNF 406 may issue a new discovery request to NRF 412 for other pNFs available to provide the requested service, at 436. In response, NRF 412 may provide information on backup DR pNF 416, which has registered since the previous discovery request. Based on the information for backup DR pNF 416, cNF 406 may access DR pNF 416 via a service request, at 438, and receive a response, at 440.

In an alternate example, cNF 406 may subscribe to NRF 412 for updates on pNFs 408 registered with the network. NRF 412 may notify cNF 406 when pNF 408 becomes unavailable, e.g., due to an interruption in 'heartbeat' messages exchanged between NRF 412 and pNF 408 to maintain a registration at NRF 412. By automatically sending an update notifying cNF 406 of the unavailability of pNF 408, cNF 406 may know to send a discovery request to NRF 412 for available pNFs without attempting and failing to access pNF 408 at 434 first.

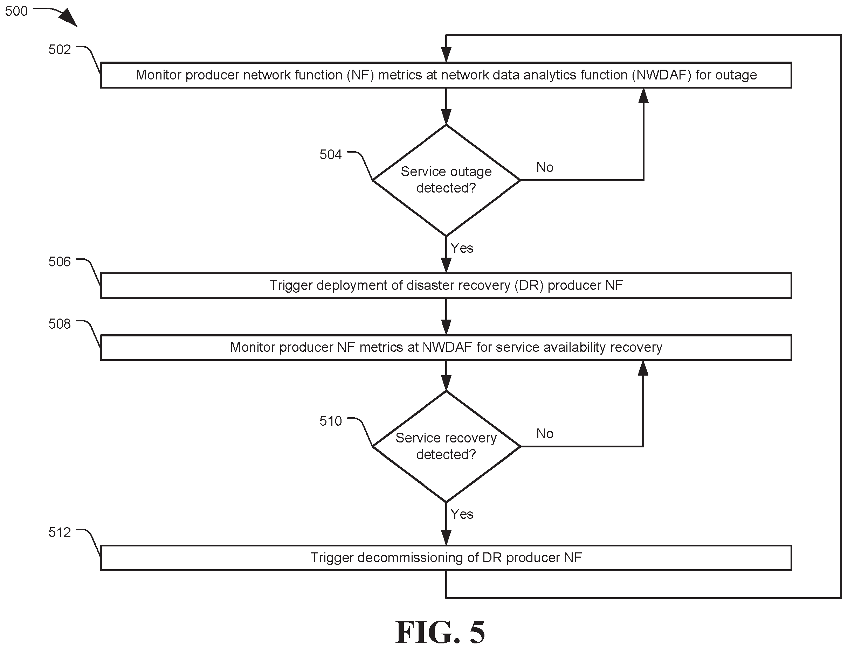

At 442, pNF 408 may recover from its unavailability and resume normal functioning. NWDAF 410 may continue to collect metrics regarding NFs at 444, including pNF 408. At 446, NWDAF 410 may determine that pNF 408 has recovered and is available, and may further determine that pNF's 408 recovery causes the service outage or unavailability to be corrected, by bringing a number of available service instances above a ratio or threshold number. In response, NWDAF 410 may issue a command to remove the backup pNF 416, at 448. Based on the removal or decommission command, the backup DR pNF 416 may de-register from NRF 412, at 450, and thereby prevent future service requests from being sent to it so that it can be removed from the network. Therefore, when cNF 406 issues a new discovery request to NRF 412, at 452, cNF 406 will not receive an indication that backup DR pNF 416 is available for service requests, but may determine that pNF 408 is still available (or has become available again). Accordingly, cNF 406 may issue the next service request to pNF 408, at 454. An example method for disaster recovery NF handling is described in regard to FIG. 5.

FIG. 5 depicts a flowchart 500 of an example method to perform automated disaster recovery network function deployment, in accordance with certain embodiments of the present disclosure. In particular, flowchart 500 depicts an example process by which an NWDAF may monitor for NF instance and service instance availability within a 5G network, automatically deploy a disaster recovery (DR) producer network function (NF) instance in the event of a service outage, and automatically decommission the DR producer NF in the event of service recovery. The method of flowchart 500 may be executed by a NWDAF, such as NWDAFs 110, 210, 310, and 410 of FIGs. 1-4.

The method may include monitoring producer NF metrics at the NWDAF, to determine whether enough NF instances or service instances are unavailable to exceed a selected threshold value, at 502. At 504, a determination may be made whether a service outage is occurring or imminent, for example based on the collected metrics indicating that more than a threshold number of available service instances or NF instances are unavailable or degraded. If no service outage is detected, the method may include continuing to monitor NF metrics, at 502.

If a service outage is detected, at 504, the method may include triggering the deployment of a disaster recovery (DR) producer NF, in order to provide the service that is compromised or unavailable.

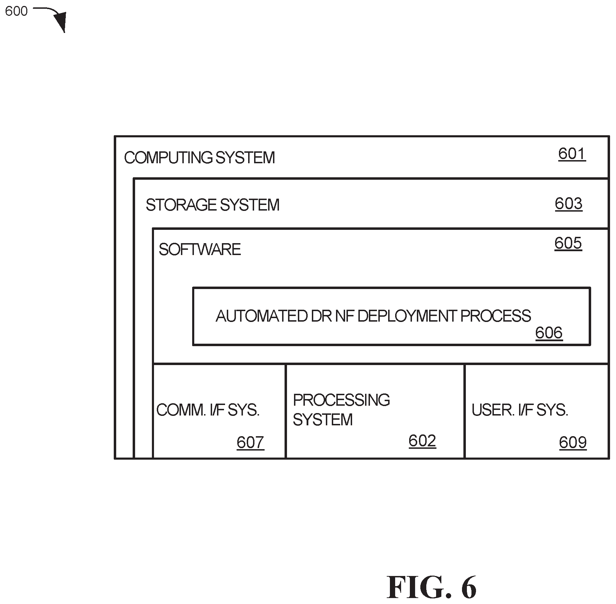

At 508, the method may include monitoring producer NF metrics at the NWDAF, for metrics indicating there may have been a service availability recovery. A determination is made whether a service recovery has been detected, at 510. If not, the method may include continuing to monitor metrics for service recovery, at 508. If a service recovery is detected, at 510, the method may include triggering the decommission of the DR producer NF, at 512. The method may include returning to 502 to monitor NF metrics for service outages. A computing system configured to perform the operations and methods described herein is provided in regard to FIG. 6.

FIG. 6 illustrates an apparatus 600 including a computing system 601 that is representative of any system or collection of systems in which the various processes, systems, programs, services, and scenarios disclosed herein may be implemented. Examples of computing system 601 include, but are not limited to, desktop computers, laptop computers, server computers, routers, web servers, cloud computing platforms, and data center equipment, as well as any other type of physical or virtual server machine, physical or virtual router, container, and any variation or combination thereof.

Computing system 601 may be implemented as a single apparatus, system, or device or may be implemented in a distributed manner as multiple apparatuses, systems, or devices. Computing system 601 may include, but is not limited to, processing system 602, storage system 603, software 605, communication interface system 607, and user interface system 609. Processing system 602 may be operatively coupled with storage system 603, communication interface system 607, and user interface system 609.

Processing system 602 may load and execute software 605 from storage system 603. Software 605 may include and implement automate disaster recovery (DR) network function (NF) deployment process 606, which may be representative of any of the operations for monitoring performance metrics of NFs within a network, determining or predicting service unavailability based on the metrics, automatically issuing commands to deploy a DR backup NF in the event of service unavailability, determining service restoration based on the metrics, and automatically issuing commands to decommission DR backup NFs, as discussed with respect to the preceding figures. When executed by processing system 602, software 605 may direct processing system 602 to operate as described herein for at least the various processes, operational scenarios, and sequences discussed in the foregoing implementations. Computing system 601 may optionally include additional devices, features, or functionality not discussed for purposes of brevity.

In some embodiments, processing system 602 may comprise a micro-processor and other circuitry that retrieves and executes software 605 from storage system 603. Processing system 602 may be implemented within a single processing device but may also be distributed across multiple processing devices or sub-systems that cooperate in executing program instructions. Examples of processing system 602 may include general purpose central processing units, graphical processing units, application specific processors, and logic devices, as well as any other type of processing device, combinations, or variations thereof.

Storage system 603 may comprise any memory device or computer readable storage media readable by processing system 602 and capable of storing software 605. Storage system 603 may include volatile and nonvolatile, removable and non-removable media implemented in any method or technology for storage of information, such as computer readable instructions, data structures, program modules, or other data. Examples of storage media include random access memory, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 603 may also include computer readable communication media over which at least some of software 605 may be communicated internally or externally. Storage system 603 may be implemented as a single storage device but may also be implemented across multiple storage devices or sub-systems co-located or distributed relative to each other. Storage system 603 may comprise additional elements, such as a controller, capable of communicating with processing system 602 or possibly other systems.

Software 605 (including automated DR NF deployment process 606 among other functions) may be implemented in program instructions that may, when executed by processing system 602, direct processing system 602 to operate as described with respect to the various operational scenarios, sequences, and processes illustrated herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 605 may include additional processes, programs, or components, such as operating system software, virtualization software, or other application software. Software 605 may also comprise firmware or some other form of machine-readable processing instructions executable by processing system 602.

In general, software 605 may, when loaded into processing system 602 and executed, transform a suitable apparatus, system, or device (of which computing system 601 is representative) overall from a general-purpose computing system into a special-purpose computing system as described herein. Indeed, encoding software 605 on storage system 603 may transform the physical structure of storage system 603. The specific transformation of the physical structure may depend on various factors in different implementations of this description. Examples of such factors may include, but are not limited to, the technology used to implement the storage media of storage system 603 and whether the computer-storage media are primary or secondary storage in nature, as well as other factors.

For example, if the computer readable storage media are implemented as semiconductor-based memory, software 605 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 607 may include communication connections and devices that allow for communication with other computing systems (not shown) over communication networks (not shown). Examples of connections and devices that together allow for inter-system communication may include network interface cards, antennas, power amplifiers, radio-frequency (RF) circuitry, transceivers, and other communication circuitry. The connections and devices may communicate over communication media to exchange communications with other computing systems or networks of systems, such as metal, glass, air, or any other suitable communication media.

Communication between computing system 601 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof.

As will be appreciated by one skilled in the art, aspects of the presently taught subject matter may be embodied as a system, method, computer program product, and other configurable systems. Accordingly, aspects of the presently taught subject matter may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the presently taught subject matter may take the form of a computer program product, such as a computer readable medium having computer readable program code embodied thereon. The computer readable medium may be provided as a computer readable storage medium (such that the instructions are embodied in one or more memory devices or other storage medium(s)) and/or as a computer readable transmission medium (such that the instructions are embodied in one more carrier waves or transmission signals).

Therefore, from one perspective, there have been described various systems and methods for automated disaster recovery network function (NF) deployment. In an embodiment, a method may comprise operating a network data analytics function (NWDAF) of a mobile network, including collecting metrics of producer NFs within the mobile network, determining an availability status of a service offered by the producer NFs based on the metrics, and automatically deploying a disaster recovery NF configured to provide the service to the mobile network when the NWDAF determines the service has an availability status of unavailable.

Further examples of feature combinations taught by the present disclosure are set out in the following numbered clauses.

Clause 1. A network data analytics function (NWDAF) system, comprising: one or more processors; and a memory having stored thereon instructions that, upon execution by the one or more processors, cause the one or more processors to: collect metrics of producer network functions (NFs) within a 5G communication network; determine an availability status of a service offered by the producer NFs based on the metrics; and automatically deploy a disaster recovery NF configured to provide the service to the 5G communication network when the NWDAF determines the service has an availability status of unavailable.

Clause 2. The NWDAF system of clause 1, wherein the instructions comprise further instructions that, upon execution by the one or more processors, cause the one or more processors to: determine when the availability status of the service changes from unavailable to available based on the metrics; and automatically decommission the disaster recovery NF when the availability status changes to available.

Clause 3. The NWDAF system of clause 2, wherein the instructions comprise further instructions that, upon execution by the one or more processors, cause the one or more processors to: continuously collect the metrics to monitor service availability within the 5G communications network.

Clause 4. The NWDAF system of clause 3, wherein the instructions comprise further instructions that, upon execution by the one or more processors, cause the one or more processors to: categorize whether each instance of the producer NFs is unavailable based on the metrics.

Clause 5. The NWDAF system of clause 4, wherein the instructions comprise further instructions that, upon execution by the one or more processors, cause the one or more processors to: determine the availability status of the service based on a number of available producer NFs that provide the service; and determine that the service is unavailable when the number of available producer NFs that provide the service falls below a configured threshold.

Clause 6. The NWDAF system of clause 5, wherein the instructions comprise further instructions that, upon execution by the one or more processors, cause the one or more processors to: determine that the availability status of the service changes from unavailable to available when the number of available producer NFs that provide the service rises back above the configured threshold.

Clause 7. The NWDAF system of clause 6, wherein the instructions comprise further instructions that, upon execution by the one or more processors, cause the one or more processors to: automatically deploy the disaster recovery NF, further comprising: issue an NF deployment command to a continuous delivery pipeline of the 5G communications network.

Clause 8. The NWDAF system of clause 7, wherein the instructions comprise further instructions that, upon execution by the one or more processors, cause the one or more processors to: automatically deploy the disaster recovery NF by creating a new NF instance.

Clause 9. The NWDAF system of clause 8, wherein the instructions comprise further instructions that, upon execution by the one or more processors, cause the one or more processors to: collect the metrics from a time-series database that obtains performance metrics from individual NFs.

Clause 10. The NWDAF system of clause 9, wherein the metrics include at least one data element from the group consisting of service-based interface (SBI) traffic failure rate, internal error rate, central processing unit (CPU) utilization, processing latency, and memory utilization.

Clause 11. A method comprising: operating a network data analytics function (NWDAF) of a mobile network, including: collecting metrics of producer network functions (NFs) within the mobile network; determining an availability status of a service offered by the producer NFs based on the metrics; and automatically deploying a disaster recovery NF configured to provide the service to the mobile network when the NWDAF determines the service has an availability status of unavailable.

Clause 12. The method of clause 11, further comprising: determining when the availability status of the service changes from unavailable to available based on the metrics; and automatically decommissioning the disaster recovery NF when the availability status changes to available.

Clause 13. The method of clause 12, further comprising: registering the disaster recovery NF with a network repository function (NRF) of the mobile network when the disaster recovery NF is deployed; and de-registering the disaster recovery NF from the NRF when the disaster recovery NF is decommissioned.

Clause 14. The method of clause 11, 12 or 13, further comprising: continuously collecting the metrics to monitor service availability within the mobile network.

Clause 15. The method of any of clauses 11 to 14, further comprising: categorizing whether each instance of the producer NFs is unavailable based on the metrics.

Clause 16. The method of clause 15, further comprising: determining the availability status of the service based on a number of available producer NFs that provide the service; and determining that the service is unavailable when the number of available producer NFs that provide the service falls below a configured threshold.

Clause 17. The method of clause 16, further comprising: determining that the availability status of the service changes from unavailable to available when the number of available producer NFs that provide the service rises back above the configured threshold.

Clause 18. The method of any of clauses 11 to 17, further comprising: automatically deploying the disaster recovery NF, including issuing an NF deployment command to a continuous delivery pipeline of the mobile network.

Clause 19. The method of any of clauses 11 to 18, further comprising: automatically deploying the disaster recovery NF by creating a new NF instance.

Clause 20. The method of any of clauses 11 to 19, further comprising: collecting the metrics from a time-series database that obtains performance metrics from individual NFs.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number respectively. The word "or," in reference to a list of two or more items, covers all the following interpretations of the word: any of the items in the list, all the items in the list, and any combination of the items in the list.

The phrases "in some embodiments," "according to some embodiments," "in the embodiments shown," "in other embodiments," and the like generally mean the particular feature, structure, or characteristic following the phrase is included in at least one implementation of the present technology, and may be included in more than one implementation. In addition, such phrases do not necessarily refer to the same embodiments or different embodiments.

The above Detailed Description of examples of the technology is not intended to be exhaustive or to limit the technology to the precise form disclosed above. While specific examples for the technology are described above for illustrative purposes, various equivalent modifications are possible within the scope of the technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or sub combinations. Each of these processes or blocks may be implemented in a variety of different ways. Also, while processes or blocks are at times shown as being performed in series, these processes or blocks may instead be performed or implemented in parallel, or may be performed at different times. Further any specific numbers noted herein are only examples: alternative implementations may employ differing values or ranges.

The teachings of the technology provided herein can be applied to other systems, not necessarily the system described above. The elements and acts of the various examples described above can be combined to provide further implementations of the technology. Some alternative implementations of the technology may include not only additional elements to those implementations noted above, but also may include fewer elements.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology encompasses not only the disclosed examples, but also all equivalent ways of practicing or implementing the technology under the claims.

To reduce the number of claims, certain aspects of the technology are presented below in certain claim forms, but the applicant contemplates the various aspects of the technology in any number of claim forms. For example, while only one aspect of the technology is recited as a computer-readable medium claim, other aspects may likewise be embodied as a computer-readable medium claim, or in other forms, such as being embodied in a means-plus-function claim. Any claims intended to be treated under 35 U.S.C. § 112(f) will begin with the words "means for" but use of the term "for" in any other context is not intended to invoke treatment under 35 U.S.C. § 112(f). Accordingly, the applicant reserves the right to pursue additional claims after filing this application to pursue such additional claim forms, in either this application or in a continuing application.

## Claims

1. A method comprising:
operating a network data analytics function (NWDAF) of a mobile network, including:
collecting metrics of producer network functions (NFs) within the mobile network;
determining an availability status of a service offered by the producer NFs based on the metrics; and
automatically deploying a disaster recovery NF configured to provide the service to the mobile network when the NWDAF determines the service has an availability status of unavailable.

2. The method of claim 1, further comprising:
determining when the availability status of the service changes from unavailable to available based on the metrics; and
automatically decommissioning the disaster recovery NF when the availability status changes to available.

3. The method of claim 2, further comprising:
registering the disaster recovery NF with a network repository function (NRF) of the mobile network when the disaster recovery NF is deployed; and
de-registering the disaster recovery NF from the NRF when the disaster recovery NF is decommissioned.

4. The method of claim 1, 2 or 3, further comprising:
continuously collecting the metrics to monitor service availability within the mobile network.

5. The method of any of claims 1 to 4, further comprising:
categorizing whether each instance of the producer NFs is unavailable based on the metrics.

6. The method of claim 5, further comprising:
determining the availability status of the service based on a number of available producer NFs that provide the service; and
determining that the service is unavailable when the number of available producer NFs that provide the service falls below a configured threshold.

7. The method of claim 6, further comprising:
determining that the availability status of the service changes from unavailable to available when the number of available producer NFs that provide the service rises back above the configured threshold.

8. The method of any of claims 1 to 7, further comprising:
automatically deploying the disaster recovery NF, including issuing an NF deployment command to a continuous delivery pipeline of the mobile network.

9. The method of any of claims 1 to 8, further comprising:
automatically deploying the disaster recovery NF by creating a new NF instance.

10. The method of any of claims 1 to 9, further comprising:
collecting the metrics from a time-series database that obtains performance metrics from individual NFs.

11. The method of claim 10, wherein the metrics include at least one data element from the group consisting of service-based interface (SBI) traffic failure rate, internal error rate, central processing unit (CPU) utilization, processing latency, and memory utilization.

12. The method of any of claims 1 to 11, wherein the mobile network is a 5G communication network.

13. A network data analytics function (NWDAF) system, comprising:
one or more processors; and
a memory having stored thereon instructions that, upon execution by the one or more processors, cause the one or more processors to:
collect metrics of producer network functions (NFs) within a 5G communication network;
determine an availability status of a service offered by the producer NFs based on the metrics; and
automatically deploy a disaster recovery NF configured to provide the service to the 5G communication network when the NWDAF determines the service has an availability status of unavailable.

14. The NWDAF system of claim 13, wherein the instructions comprise further instructions that, upon execution by the one or more processors, cause the one or more processors to implement the method of any of claims 2 to 12.
determine when the availability status of the service changes from unavailable to available based on the metrics; and
automatically decommission the disaster recovery NF when the availability status changes to available.

15. A computer readable medium comprising instructions that, upon execution by one or more processors, cause the one or more processors to carry out the method of any of claims 1 to 12.
